(19) Europäisches Patentamt

European Patent Office

Office européen des brevets

(11) **EP 1 193 577 B1**

(12) **EUROPÄISCHE PATENTSCHRIFT**

(45) Veröffentlichungstag und Bekanntmachung des Hinweises auf die Patenterteilung:
**16.02.2005 Patentblatt 2005/07**

(51) Int Cl.[7]: **G05B 17/00**

(21) Anmeldenummer: **01121421.0**

(22) Anmeldetag: **07.09.2001**

(54) **Verfahren zur Signalvorhaltfilterung**

Method for filtering a signal with derivative action

Méthode pour le filtrage d'un signal à derivation

(84) Benannte Vertragsstaaten:
**DE FR GB**

(30) Priorität: **27.09.2000 DE 10047745**

(43) Veröffentlichungstag der Anmeldung:
**03.04.2002 Patentblatt 2002/14**

(73) Patentinhaber: **Bayerische Motoren Werke Aktiengesellschaft**
**80809 München (DE)**

(72) Erfinder: **Baumgarten, Götz, Dr.**
**85757 Karlsfeld (DE)**

(56) Entgegenhaltungen:
**DE-A- 3 615 663          DE-A- 19 738 824**

• **PATENT ABSTRACTS OF JAPAN vol. 1998, no. 10, 31. August 1998 (1998-08-31) & JP 10 124106 A (FUJI ELECTRIC CO LTD), 15. Mai 1998 (1998-05-15)**

**Beschreibung**

Die Erfindung betrifft ein Verfahren zur Signalvorhaltfilterung gemäß dem Oberbegriff des Anspruchs 1.

In vielen Bereichen der Technik werden heutzutage schnelle Regelsysteme eingesetzt. Um beispielsweise die Fahrsicherheit und den Fahrkomfort zu erhöhen, wird das Fahrverhalten bei Kraftfahrzeugen heutzutage durch eine Vielzahl von Regelsystemen beeinflusst. Insbesondere wird dabei das Zusammenspiel zwischen Fahrer und Fahrzeug verbessert. Die zugehörigen Regelungsfunktionen benötigen verschiedene Sensorinformationen, die in unterschiedlicher Qualität, beispielsweise in Bezug auf das Signalrauschen und die Signalverzögerung (Phasenverzug) sowie die Amplitudengenauigkeit, vorliegen. Ferner benötigen bestimmte Regelungssysteme Messinformationen schneller, als sie von den Sensoren geliefert werden können, um andere Phasenverzögerungen im Regelkreis zu kompensieren. Beispielseise bei einer Wankstabilisierung, welche die gemessene Querbeschleunigung auf Aktoren aufschaltet, die wiederum durch das von ihnen erzeugte Rollmoment die Wankbewegung des Fahrzeugaufbaus reduzieren, sind die Phasenverzögerungen der Aktoren störend.

Zur Kompensation einer zu großen Phasenverzögerung ist es bekannt, eine Vorhaltfilterung durchzuführen. Ausgegangen wird dabei von einer Übertragungsfunktion, welche ein Eingangssignal einer Regelstrecke auf ein Messsignal, welches wiederum das Ausgangssignal der Regelstrecke darstellt, abbildet. Der Phasenverzug zwischen dem Eingangssignal und dem Messsignal soll dabei durch Anwendung eines entsprechenden Vorhaltfilters verkleinert werden.

Ein einfacher, aus dem Stand der Technik bekannter Vorhaltfilter ist ein sogenannter PDT1-Filter, also ein Filter erster Ordnung, mit dem das Messsignal beaufschlagt wird. Ein solcher Filter kann in der Form

$$y = y_{mess} \cdot \frac{T_n s + 1}{T_p s + 1} \tag{1}$$

dargestellt werden, wobei s die Laplace-Variable und $T_n$, $T_p$ Zeitkonstanten sind. Nähert man die Übertragungsfunktion vom Wert der Eingangsgröße $u_{mess}$ auf die Augangs- oder Messgröße $y_{mess}$ selbst als Verzögerungsglied erster Ordnung an, nämlich

$$y_{mess} \cong u_{mess} \cdot \frac{k_{mod}}{T_{mod} s + 1} \tag{2}$$

wobei $k_{mod}$ und $T_{mod}$ Modellparameter der modellierten Regelstrecke sind, und fordert nun einen kleineren Phasenverzug, also eine kleinere Zeitkonstante $T_{soll}$ ($T_{soll} < T_{mod}$), so führt dies zu der Gleichung

$$y_{soll} = u_{mess} \cdot \frac{k_{mod}}{T_{soll} s + 1} \tag{3}$$

Dabei werden nun für den Filter erster Ordnung die Zeitkonstanten $T_n = T_{mod}$ und $T_p = T_{soll}$ gewählt. Die Nullstellen des Filters kompensieren damit den Pol der Regelstrecke. Durch den neuen Pol mit der gewünschten Zeitkonstante $T_{soll}$ kann dann ein kleinerer Phasenverzug erreicht werden.

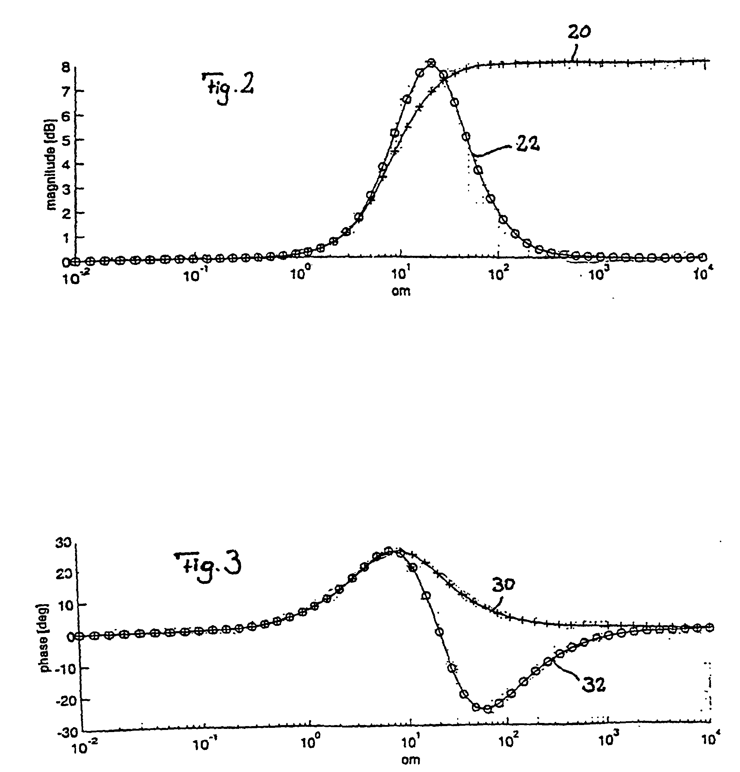

In Figur 2 sind die Amplitudengänge bei einem Filter erster Ordnung (Graph 20) und einem Filter zweiter Ordnung (Graph 22) über den Frequenzgang eingezeichnet.

Wie dabei zu erkennen ist werden bei einem Filter erster Ordnung (Graph 20) alle hohen Frequenzen stark verstärkt. Dies führt zu einem übermäßigen Signalrauschen. Aus diesem Grund ist ein Vorhaltfilter erster Ordnung zwar aus Gründen des Phasenverzuges positiv, aus Signalrauschgründen jedoch negativ zu bewerten.

Die Phasenanhebung der jeweiligen Filter ist in Fig. 3, Graph 30 und 32, zu sehen.

Ebenfalls bekannt ist die Verwendung eines Filters zweiter Ordnung (PD2T2-Filter) als Vorhaltfilter, also

$$y = u \cdot \frac{s^2 + a_1 \cdot s + a_0}{s^2 + b_1 \cdot s + b_0} \tag{4}$$

mit s = Laplace-Variable und $a_0$, $a_1$, $b_0$ und $b_1$ als Parameter.

Im Diagramm der Figur 2 (Graph 22) sieht man dabei deutlich, dass die Verstärkung im oberen Frequenzbereich wieder zu 1 bzw. 0 dB zurückkehrt. Nachteilig bei diesem Filter ist jedoch, dass die zu erzielende Vorhaltwirkung nicht so hoch ist, wie bei einem Vorhaltfilter erster Ordnung.

Im Diagramm der Figur 3 sind die Phasenverläufe der beiden Filter erster (Graph 30) und zweiter Ordnung (Graph 32) eingezeichnet. Während mit einem Filter erster Ordnung (Graph 30) meist eine befriedigende Phasenanhebung erreicht werden kann, ist dies mit einem Filter zweiter Ordnung (Graph 32) über Teilfrequenzbereiche nicht möglich. Damit kann mit einem Filter zweiter Ordnung in vielen Fällen keine ausreichende Vorhaltfilterung mehr erreicht werden.

Aus dem Stand der Technik sind bereits verschiedenste Regelsysteme mit Vorhaltfilterung bekannt. Die DE 197 38 824 A1 beispielsweise beschreibt eine Reglerschaltungsanordnung mit nachgiebiger Rückführung, wobei die Rückführung einen Filter und ein Modell oder einen Beobachter enthält.

Die DE 36 15 663 A1 beschreibt ein Verfahren zur Istwertglättung. Dabei wird bei einem System umfassend eine Regelstrecke, ein auf die Regelstrecke wirkendes Stellglied, und ein der Regetstrecke parallelgeschaltetes Regelstrekkenmodell ein amplitudenfehlerfreier und phasenfehlerfreier Nutzistwert gebildet.

Ferner ist gemäß der Zusammenfassung der JP10124106 ein Regelungssystem beschrieben, bei dem ausgangsseitig ein zu schneller Amplitudenanstieg vermieden werden soll.

Aufgabe der vorliegenden Erfindung ist es, ein Verfahren zur Vorhaltfilterung anzugeben, bei dem ein Messsignal mit einer gewünschten Phasenanhebung bei nur kleiner Verrauschung generierbar ist.

Diese Aufgabe wird durch die im Anspruch 1 genannten Merkmale erfüllt.

Ein Kerngedanke der Erfindung besteht darin, einen an sich bekannten Vorhaltfilter für einen maximalen Vorhalt bei kleiner Verrauschung zu verwenden und dem daraus generierten Messsignal einen zusätzlichen Vorhalt beizumischen, der wiederum vom Eingangswert abhängt. In dieser Korrektur ist erfindungsgemäß ein Modell der Regelstrecke enthalten. Prinzipiell wird also zunächst versucht, mit einem bekannten Vorhaltfilter, z.B. zweiter Ordnung, möglichst viel des gewünschten Signalvorhalts zu erreichen, ohne jedoch das Messrauschen zu verstärken. Als Vorhaltfilter können dabei alle an sich bekannten Vorhaltfilter verwendet werden. Zusätzlich wird dem so gefilterten Messsignal noch eine spezielle Beimischung des Eingangssignals hinzugeführt.

Gemäß Anspruch 1 wird ein Eingangswert und ein Ausgangswert für eine Regelstrecke erfasst und der Ausgangswert der Regelstrecke mit einem Filter für ein erstes Vorhaltsignal beaufschlagt, wobei aus dem Eingangswert in einem parallelen Schritt ein Beimischwert bestimmt wird, mit dem das erste Vorhaltsignal zu einem Gesamtvorhaltsignal korrigiert wird. Dabei ist der Eingangswert der Regelstrecke auch Eingangssignal eines Regeistreckenmodells, durch das ein berechneter Ausgangswert der (tatsächlichen) Regelstrecke erzeugt wird. Hierbei werden die oben erwähnten theoretischen Annahmen über das grundsätzlich bekannte Verhalten der (tatsächlichen) Regelstrecke getroffen. Der Beimischwert wird durch Beaufschlagung des berechneten Ausgangswertes mit einem (zweiten) Vorhaltfilter gebildet. Hierdurch wird der Beimischwert bzw. der unabhängig vom (tatsächlichen) Messsignal erzeugte Vorhalt besonders genau. Je genauer der berechnete Ausgangswert und damit der daraus gebildete Beimischwert bestimmbar ist, desto größer kann der zweite Vorhalt und desto kleiner kann der erste Vorhalt gewählt werden.

Vorzugsweise wird die mit der ersten Vorhaltfilterung erreichte Übertragungsfunktion vorzugsweise durch eine eigene Übertragungsfunktion erster Ordnung angenähert.

Der Ausgangswert, auf den die übliche Vorhaltfilterung (z.B. zweiter Ordnung) angewendet wird, kann entweder messtechnisch oder über eine Modellbildung ermittelt werden.

Den Beimischwert erzielt man durch eine Filterung des Eingangssignals, beispielsweise mit einem Filter erster oder zweiter Ordnung. In diesem Filter sind vorzugsweise Größen enthalten, die ein Modell der Regelstrecke darstellen. Zwar treten dabei prinzipiell ähnliche Probleme auf, wie bei der Verwendung eines Beobachtermodells. Jedoch wirken sich dessen Nachteile durch die Modellannahmen hierbei nicht so stark aus, da mit einer bekannten Vorhaltfilterung bereits ein wesentlicher Anteil des gewünschten Vorhalts erzeugt wird, ohne dass ein Modell für die Regelstrecke benutzt werden muss. Dadurch werden die Modellannahmen hier nicht so stark gewichtet wie beim Beobachter.

Ein konkretes Ausführungsbeispiel der vorliegenden Erfindung wird nachfolgend anhand der beiliegenden Figuren näher erläutert. Die Figuren zeigen in

Figur 1    ein erstes Ausführungsbeispiel in Form eines einfachen Blockschemadiagramms eines erfindungsgemäßen Regelverfahrens,

Figur 2    ein Diagramm, welches den frequenzabhängigen Amplitudengang (magnitude) für eine Vorhaltfilterung erster und zweiter Ordnung darstellt,

Figur 3    ein Diagramm, welches die Phasen (phase) für eine Vorhaltfilterung erster und zweiter Ordnung darstellt,

Figur 4a    eine gegenüber Fig. 1 vereinfachte Darstellung der Erfindung mit einem ersten und einem zweite Vorhaltfilter.

Das vorliegende Ausführungsbeispiel bezieht sich auf eine Fahrzeugregelung mit einem Lenkwinkelsignal als Eingangswert, im ff. auch Eingangsgröße u bzw. $u_{mess}$ der Regelstrecke genannt, und einer Querbeschleunigung als Ausgangswert, im ff. auch Ausgangs- oder Messsignal $y_{mess}$ aus der Regelstrecke genannt. Der Phasenverzug zwischen den beiden Größen $u_{mess}$ und $y_{mess}$ soll prinzipiell verkleinert werden, wodurch ein gesuchtes Signal $y_{soll}$ durch die Vorhaltfilterung entsteht. Die Regelstrecke 10 wird in diesem Beispiel insbesondere durch das Verhalten der Fahrzeugkomponenten zwischen dem Lenkrad und den Radaufhängungen bestimmt. Das Lenkwinkelsignal liegt üblicherweise als nahezu unverrauschtes Sensorsignal vor. Die Querbeschleunigung liegt üblicherweise als stärker verrauschtes Sensorsignal vor.

Mit einem bekannten Vorhaltfilter zweiter Ordnung wird vorliegend zunächst versucht, bereits möglichst viel des gewünschten Signalvorhalts für $y_{soll}$ zu erreichen. Dies lässt sich mathematisch wie folgt beschreiben:

$$y_{Vorhalt1} = y_{mess} \cdot \frac{s^2 + a_1 \cdot s + a_0}{s^2 + b_1 \cdot s + b_0} \tag{5}$$

mit s = Laplace-Variable und $a_0$, $a_1$, $b_0$ und $b_1$ als Parameter.

Man nähert dann die Übertragungsfunktion von $u_{mess}$ nach $y_{Vorhalt1}$ selbst als Verzögerungsglied erster Ordnung an, also

$$y_{Vorhalt1} = u_{mess} \cdot \frac{k_{mod}}{T_{mod} s + 1} \tag{6}$$

Da ein Vorhaltsignal $y_{soll}$ mit einem kleinen $T_{soll}$ ($T_{soll} < T_{mod}$) erreicht werden soll, folgt:

$$y_{soll} = u_{mess} \cdot \frac{k_{mod}}{T_{soll} s + 1} \tag{7}$$

Man erreicht den gewünschten Vorhalt, der durch das Signal $y_{Vorhalt2}$ erfüllt wird, somit durch

$$y_{Vorhalt2} = u_{mess} \cdot \frac{T_{mod} \cdot s}{T_{soll} \cdot s + 1} \cdot \frac{k_{mod}}{T_{mod} \cdot s + 1} + y_{Vorhalt1} \cdot \frac{1}{T_{soll} s + 1} \tag{8}$$

Dabei entspricht das erste Produkt der Gleichung (8) dem Beimischwert B.

Die Größen $T_{mod}$ und $k_{mod}$ sind dabei Größen, welche die Übertragung von $u_{mess}$ nach $y_{Vorhalt1}$ nach Gleichung (6) beschreiben.

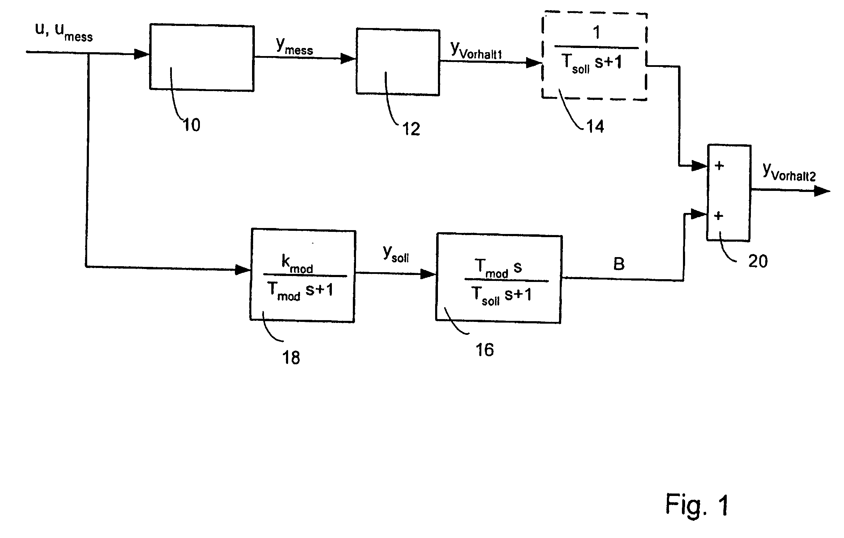

Durch Vergleich mit dem Blockschaltdiagramm in Figur 1 kann man nun den konstruktiven Aufbau einer Regelstrecke zur Verwirklichung eines erfindungsgemäßen Verfahrens ersehen.

Das Eingangssignal u bzw. $u_{mess}$, vorliegend also der Lenkeinschlag, geht als Eingangsgröße in die Regelstrecke 10, was vorliegend als Kraftfahrzeug realisiert ist, ein. Am Ende der Regelstrecke wird ein Messsignal $y_{mess}$ erzeugt, was vorliegend die Querbeschleunigung darstellt.

Die beiden Summanden der oben beschriebenen Formel (8) werden nun in zwei parallelen Zweigen umgesetzt. Im ersten, in Fig. 1 oberen Zweig wird vorliegend das (erste) Vorhaltfilter zweiter Ordnung 12 implementiert. Es folgt ein weiteres PT1-Filter 14, welches die erste Größe zur Aufsummierung durch einen Addierer 20 berechnet. Filter 14 kann auch entfallen.

Im unteren Zweig wird über die Filter 16 und 18 aus der Eingangsgröße $u_{mess}$ die 2. Größe (Beimischwert, zweiter Vorhalt) zur Aufsummierung durch den Addierer 20 berechnet. Das Ergebnis aus dem Addierer 20 ist dann das Signal $y_{Vorhalt2}$ mit dem gewünschten gesamten Vorhalt, welches durch das Modell in Gleichung (3) gefordert war. Der Filter 16 stellt den zweiten Vorhaltfiter dar. Durch Filter 18 wird ein mögliches Regelstrecken-Rechenmodell realisiert.

Die hier gezeigte Lösung ist besonders effektiv, wenn sich die Modellunsicherheiten im wesentlichen auf die stationäre Verstärkung der Übertragungsfunktion $k_{mod}$ und weniger in der Zeitkonstanten $T_{mod}$ zeigen, und wenn sich ein wesentlicher Anteil des Vorhalts bereits mit dem Vorhaltfilter 12 erreichen lässt.

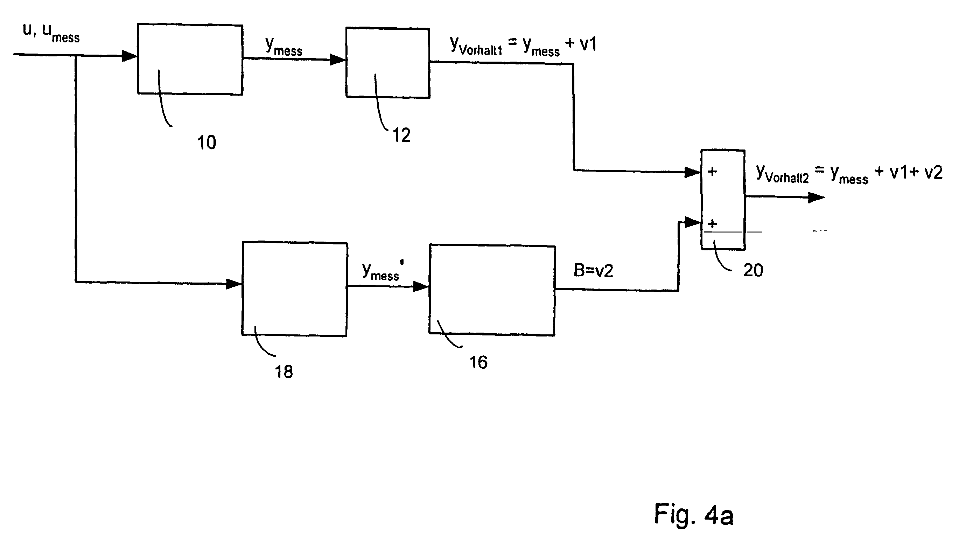

Fig. 4a zeigt ein Blockschaltbild zur im Vergleich mit Fig. 1 verallgemeinerten Darstellung des erfindungsgemäßen Verfahrens zur Signalvorhaltfilterung. Der Eingangswert u bzw. $u_{mess}$ ist Eingangssignal der (tatsächlichen) Regelstrecke 10. Das Messsignal $y_{mess}$ ist Ausgangswert der Regelstrecke 10 und wird beispielsweise mittels eines Sensors erfasst. Der Ausgangswert $y_{mess}$ der Regelstrecke 10 wird mit einem ersten Vorhaltfilter 12 zur an sich bekannten Erzeugung eines ersten Vorhaltsignals $y_{Vorhalt1}=y_{mess}+v1$ beaufschlagt. Diese Darstellung basiert auf einer diskreten Filtergleichung, bei der dem Eingangswert (hier $y_{mess}$) des Filters (hier Vorhaltfilter 12) ein (zusätzlicher) Vorhalt bzw. Vorhaltanteil hinzuaddiert wird.

Der Wert v1 ist somit der erste Vorhalt. Aus dem Eingangswert $u_{mess}$ wird ein Beimischwert B zur Erzeugung eines zweiten Vorhalts v2 für den Ausgangswert $y_{mess}$ bestimmt, indem der Eingangswert u bzw. $u_{mess}$ auch Eingangssignal eines Regelstrecken-Rechenmodells 18 ist, durch das ein berechneter Ausgangswert $y_{mess}'$ (entspricht $y_{soll}$ aus Fig. 1) erzeugt wird. Das Rechenmodell 18 bildet die Regelstrecke 10 unter bekannten theoretischen Annahmen und Vereinfachungen zum Verhalten der (tatsächlichen) Regelstrecke 10 mathematisch nach. Dadurch ist der berechneter Ausgangswert $y_{mess}'$ weitgehend unverrauscht. Der Beimischwert B und damit der zweite Vorhalt v2 wird durch Beaufschlagung des berechneten Ausgangswertes $y_{mess}'$ mit dem (zweiten) Vorhaltfilter 16 gebildet. Der Amplitudenanteil vom Ausgangswert $y_{mess}$ bzw. $y_{mess}'$ wird dabei im Unterschied zur Bildung des ersten Vorhaltsignals $y_{Vorhalt1}=y_{mess}+v1$ außer Acht gelassen. Das erste Vorhaltsignal $y_{Vorhalt1}$ wird mit dem Beimischwert B=v2 zu einem Gesamtvorhaltsignal $y_{Vorhalt2}=y_{mess}+v$, mit v=v1+v2, korrigierend addiert.

Lediglich ergänzend wird darauf hingewiesen, dass das Ausgangssignal des Rechenmodells 18 beispielsweise auch ein berechneter bzw. geschätzter Ausgangswert ($y_{Vorhalt1}'$) mit Vorhalt sein kann.

Der aus dem verrauschten Messsignal $y_{mess}$ erzeugte erste Vorhalt v1 ist vorzugsweise kleiner als der aus dem weitgehend unverrauschten Eingangswert $u_{mess}$ mittels des Rechenmodells 18 erzeugte zweite Vorhalt v2, wenn insbesondere das Rechenmodell 18 sehr genau ist.

**Patentansprüche**

**1.** Verfahren zur Signalvorhaltfilterung, bei dem

- ausgehend von einer Übertragungsfunktion, welche ein Eingangssignal (u, $u_{mess}$) einer Regelstrecke (10) auf ein Messsignal ($y_{mess}$) abbildet, wobei das Messsignal ($y_{mess}$) das Ausgangssignal der Regelstrecke (10) darstellt, der Phasenverzug zwischen Eingangssignal (u, $u_{mess}$) und Ausgangssignal ($y_{mess}$) durch Anwendung eines Vorhaltfilters verkleinert wird, in dem

- das Eingangssignal (u, $u_{mess}$) für die Regeistrecke (10) und das Ausgangssignal ($y_{mess}$) der Regelstrecke (10) erfasst werden, und

- aus dem Eingangssignal (u, $u_{mess}$) ein Beimischwert (B) mittels eines Vorhaltfilters (16) zur Erzeugung eines Vorhalts (v) für das Ausgangssignal ($y_{mess}$) bestimmt wird, indem das Eingangssignal (u, $u_{mess}$) der Regeistrecke (10) auch das Eingangssignal eines Regelstrecken-Rechenmodells (18) bildet, durch das ein berechnetes Ausgangssignal ($y_{mess}'$; $y_{soll}$) erzeugt wird, und dass der Beimischwert (B) durch Beaufschlagung des berechneten Ausgangssignals ($y_{mess}'$) mit dem Vorhaltfilter (16) gebildet wird,

- und das mit einem Vorhaltfilter (12) beaufschlagte Ausgangssignal ($y_{vorhalt1}$) mittels Summenbildung mit dem Beimischwert (B=v) zu einem Gesamtvorhaltsignal ($y_{Vorhalt2}$) beaufschlagt wird.

**2.** Verfahren nach Anspruch 1, **dadurch gekennzeichnet, dass** das Ausgangssignal ($y_{mess}$) der Regelstrecke (10) messtechnisch bestimmt wird.

**3.** Verfahren nach Anspruch 1, **dadurch gekennzeichnet, dass** das Ausgangssignal ($y_{mess}$) der Regelstrecke (10) über eine Modellbildung ermittelt wird.

**4.** Verfahren nach einem der vorstehenden Ansprüche, **dadurch gekennzeichnet, dass** der Beimischwert (B) durch eine Filterung des Eingangssignals ($u_{mess}$) mit einer Kombination aus Filter erster und/oder zweiter Ordnung bestimmt wird.

**Claims**

**1.** A method for filtering a signal with derivative action, wherein, starting from a transmission function, which maps an input signal (u, $u_{meas}$) of a control path (10) onto a measuring signal ($y_{meas}$), wherein the measuring signal ($y_{meas}$) represents the output signal of the control path (10), the phase delay between input signal (u, $u_{meas}$) and output signal ($y_{meas}$) being reduced by applying a filter with derivative action, in which the input signal (u, $u_{meas}$) for the control path (10) and the output signal ($y_{meas}$) of the control path (10) are detected and an additional value (B) is determined from the input signal (u, $u_{meas}$) by means of a filter (16) with derivative action to generate a derivative action (v) for the output signal ($y_{meas}$), in that the input signal (u, $u_{meas}$) of the control path (10) also forms the input signal of a control path calculation model (18), by which a calculated output signal ($y_{meas}'$, $y_{desired}$) is generated, and in that the additional value (B) is formed by subjecting the calculated output signal ($y_{meas}'$) to the filter (16) with derivative action, and the output signal ($y_{derivative action1}$) Subjected to a filter (12) with derivative action is subjected to summation with the additional value (B=v) to form an overall derivative action signal ($y_{derivative action2}$).

**2.** A method according to claim 1, **characterised in that** the output signal ($y_{meas}$) of the control path (10) is determined metrologically.

**3.** A method according to claim 1, **characterised in that** the output signal ($y_{meas}$) of the control path (10) is determined by modelling.

**4.** A method according to any one of the preceding claims, **characterised in that** the additional value (B) is determined by filtering the input signal ($u_{meas}$) with a combination of filters of the first and/or second order.


**Revendications**

**1.** Procédé de filtration à action dérivée d'un signal, selon lequel

- à partir d'une fonction de transfert, qui représente un signal d'entrée (u, $u_{mess}$) d'un circuit de régulation (10) sur un signal de mesure ($y_{mess}$), le signal de mesure ($y_{mess}$) représentant le signal de sortie du circuit de régulation (10), le retard de phase entre le signal d'entrée (u, $u_{mess}$) et le signal de sortie ($y_{mess}$) est réduit par l'utilisation d'un filtre à action dérivée,

   **caractérisé en ce que**

- le signal d'entrée (u, $u_{mess}$) pour le circuit de régulation (10) et le signal de sortie ($y_{mess}$) du circuit de régulation (10) sont saisis, et
- à partir du signal d'entrée (u, $u_{mess}$), une valeur d'admixtion (B) est déterminée au moyen d'un filtre à action dérivée (16) pour la génération d'une action dérivée (v) pour le signal de sortie ($y_{mess}$), dans le sens où le signal d'entrée (u, $u_{mess}$) du circuit de régulation (10) forme également le signal d'entrée d'un modèle de calcul de circuit de régulation (18), qui permet de générer un signal de sortie calculé ($y_{mess}'$ ; $y_{soll}$), et la valeur d'admixtion (B) est formée en soumettant le signal de sortie calculé ($y_{mess}'$) au filtre à action dérivée (16), et
- le signal de sortie ($y_{Vorhalt1}$) soumis à un filtre à action dérivée (12) fait l'objet d'une sommation avec la valeur d'admixtion (B=v) pour former un signal à action dérivée global ($y_{Vorhalt2}$).

**2.** Procédé selon la revendication 1,
   **caractérisé en ce que**
   le signal de sortie ($y_{mess}$) du circuit de régulation (10) est déterminé par des techniques de mesure.

**3.** Procédé selon la revendication 1,
   **caractérisé en ce que**
   le signal de sortie ($y_{mess}$) du circuit de régulation (10) est déterminé par une modélisation.

**4.** Procédé selon l'une des revendications précédentes,
   **caractérisé en ce que**
   la valeur d'admixtion (B) est déterminée par une filtration du signal d'entrée ($u_{mess}$) avec une combinaison de filtres de premier et/ou de second ordre.

Fig. 1

Fig.2

Fig.3

Fig. 4a